Europäisches Patentamt

European Patent Office

Office européen des brevets

(19)

(11) Veröffentlichungsnummer: **0 047 400 B1**

(12) # EUROPÄISCHE PATENTSCHRIFT

(45) Veröffentlichungstag der Patentschrift:
03.07.85

(51) Int. Cl.⁴: **B 62 D 53/08**

(21) Anmeldenummer: **81106173.8**

(22) Anmeldetag: **06.08.81**

(54) **Anordnung einer Sattelkupplung auf einer Brückenkonstruktion eines Sattelschleppers.**

(30) Priorität: **04.09.80 DE 3033364**

(43) Veröffentlichungstag der Anmeldung:
**17.03.82 Patentblatt 82/11**

(45) Bekanntmachung des Hinweises auf die Patenterteilung:
**03.07.85 Patentblatt 85/27**

(84) Benannte Vertragsstaaten:
**AT BE CH DE FR GB IT LI LU NL SE**

(56) Entgegenhaltungen:
**CH - A - 219 557
DE - B - 1 097 466
US - A - 2 681 236

Prospekt MP 1008 der Fa. Jost-Werke GmbH, 1980,
Neu-Isenburg BRD**

(73) Patentinhaber: **ROCKINGER Spezialfabrik für
Anhängerkupplungen GmbH & Co.,
Orleansstrasse 12 Postfach 80 14 44,
D-8000 München 80 (DE)**

(72) Erfinder: **Nauwerck, Bertram, Hummelweg 22,
D-8039 Puchheim-Bhf (DE)**
Erfinder: **Raaber, Alfons, Riemerschmidstrasse 9,
D-8000 München 45 (DE)**

(74) Vertreter: **Weickmann, Heinrich, Dipl.-Ing. et al,
Patentanwälte Dipl.-Ing. H.Weickmann Dipl.-Phys.Dr.
K.Fincke Dipl.-Ing. F.A.Weickmann Dipl.-Chem. B. Huber
Dr.-Ing. H. Liska Dipl.-Phys.Dr. J. Prechtel
Postfach 860820, D-8000 München 86 (DE)**

## Beschreibung

Die Erfindung betrifft eine Anordnung einer aus Sattelplatte und Lagerböcken bestehenden Sattelkupplung auf einer Brückenkonstruktion eines Sattelschleppers, bei welchen die Lagerböcke auf der Brückenkonstruktion unter Zwischenschaltung einer Montageplatte befestigt sind, wobei die Montageplatte aus mindestens einem äusseren, quer zur Fahrtrichtung verlaufenden Wellenprofil und mindestens einem inneren quer zur Fahrtrichtung verlaufenden Wellenprofil besteht, diese Wellenprofile mit ihren Basen an der Brückenkonstruktion befestigt sind, das äussere Wellenprofil auf der Oberseite seines Scheitelteils als Lagerbockauflager dient und das innere Wellenprofil mit der Oberseite seines Scheitelteils an der Unterseite des Scheitelteils des äusseren Wellenprofils befestigt ist.

Solche Anordnungen sind bekannt. Die Montageplatten dienen dabei insbesondere zur Überbrückung von Höhendifferenzen der Sattelplatte gegenüber der Brückenkonstruktion, welche durch die Höhe der Sattelkupplung selbst nicht ausgeglichen werden. Das Problem eines solchen Höhenausgleichs stellt sich insbesondere deshalb, weil moderne Sattelschlepper im Hinblick auf niedrig bauende Sattelaufleger, insbesondere für sehr hohe Container, niedrig gebaut werden. Diese niedrig gebauten Sattelschlepper müssen aber andererseits auch häufig in Verbindung mit älteren Sattelauflegern verwendet werden, welche für höher bauende Sattelschlepper konzipiert worden sind.

Die Sattelplatten müssen erhebliche Kräfte insbesondere in Fahrtrichtung übernehmen und deshalb kräftig ausgebildet werden.

Aus US-A-2 681 236 ist eine erste Konstruktion einer Montageplatte bekannt, die als ein mehrfach gewelltes Wellenprofil ausgebildet ist, wobei die einzelnen Wellen als Trapezprofilwellen ausgeführt sind. Diese bekannten Montageplatten müssen verhältnismässig schwer sein, um die an ihnen auftretenden Kräfte aufnehmen zu können.

Bei einer weiterhin bekannten Ausführungsform (Prospekt MP 1008 der Fa. Jost-Werke GmbH, 1980) ist innerhalb eines äusseren Hutprofils ein inneres Hutprofil angeordnet, wobei die Flanken des inneren Hutprofils zu den benachbarten Flanken des äusseren Hutprofils jeweils parallel sind und die Basen des inneren und des äusseren Hutprofils unabhängig voneinander an der Brückenkonstruktion befestigt sind. Auch diese Ausführungsform kann den im Betrieb zu erwartenden Belastungen nur standhalten, wenn sie sehr schwer ausgeführt wird.

Der Erfindung liegt die Aufgabe zugrunde eine Montageplatte anzugeben, welche dank ihrer strukturellen Festigkeit leichter gebaut werden kann als die bisher bekannten Montageplatten.

Zur Lösung dieser Aufgabe wird erfindungsgemäss vorgeschlagen, dass von den Flanken des inneren Wellenprofils mindestens eine gegen die benachbarte Flanke des äusseren Wellenprofils geneigt ist. Auf diese Weise werden die in Fahrtrichtung wirkenden Kräfte in Zugkräfte umgesetzt, welche auch bei leichten Konstruktionen ausreichende Festigkeit bieten.

Im Hinblick auf eine Vereinfachung des Aufbaus und eine Vereinfachung der Montage auf der Brückenkonstruktion wird in Weiterbildung der Erfindung vorgeschlagen, dass die Basen des äusseren Wellenprofils und die Basen des inneren Wellenprofils wenigstens teilweise übereinanderliegen und gemeinsam an der Brückenkonstruktion befestigt sind, etwa mittels Schraubbolzen. Dieser Gedanke lässt sich besonders einfach dann realisieren, wenn die Basen des äusseren Wellenprofils und des inneren Wellenprofils wenigstens zum Teil von in horizontaler Ebene liegenden Flanschen gebildet sind.

Es ist zwar möglich, sowohl das äussere Wellenprofil als auch das innere Wellenprofil über den gesamten Querabstand der Lagerböcke und darüber hinaus zu erstrecken. Es hat sich jedoch gezeigt, dass bei der erfindungsgemässen Konstruktion die Festigkeit auch dann noch ausreichend ist, wenn sich nur das äussere Wellenprofil quer zur Fahrtrichtung über den vollen Abstand der Lagerböcke und ggf. ein wenig darüber hinaus erstreckt und wenn andererseits im Bereich der Lagerböcke jeweils mindestens ein quer zur Fahrtrichtung kürzeres Wellenprofil angeordnet ist.

Eine besonders leicht herzustellende und dennoch den Beanspruchungen im Betrieb leicht standhaltende Konstruktion besteht darin, dass in Fahrtrichtung beabstandet, zwei äussere Hutprofile und innerhalb dieser äusseren Hutprofile mindestens jeweils ein inneres Hutprofil angeordnet sind. Was die Anordnung der inneren Hutprofile anbelangt, so brauchen auch diese hier wieder nicht über die ganze Quererstreckung zwischen den Lagerböcken durchzulaufen; es genügt vielmehr, wenn zwei innere Hutprofile quer zur Fahrtrichtung nebeneinander angeordnet sind, jeweils eines im Bereich jedes Lagerbockes.

Die Scheitelteile der äusseren und der inneren Hutprofile werden vorzugsweise in Fahrtrichtung jeweils im Bereich der vorderen und der hinteren Enden der Lagerböcke angeordnet, wo sich die Befestigungsmittel der Lagerböcke befinden, um die Lagerböcke mit möglichst grosser Befestigungsbasis auf der Montageplatte befestigen zu können.

Bei der bevorzugten Ausführungsform bei der die inneren und die äusseren Wellenprofile jeweils von einzelnen Hutprofilen gebildet sind, erweist es sich als besonders vorteilhaft, wenn von den Flanken eines äusseren Hutprofils jeweils die von dem anderen äusseren Hutprofil fernliegende Flanke zur Längsmitte der Lagerböcke hin ansteigt, während die dem jeweils anderen äusseren Hutprofil naheliegende Flanke im wesentlichen senkrecht zur Längsmitte der Lagerböcke verläuft. Auf diese Weise wird hohe Druckfestigkeit in vertikaler Richtung mit hoher Schubfestigkeit in Fahrtrichtung optimal kombiniert.

Die Flanken der inneren Hutprofile können mit deren Scheitelteil jeweils ein im wesentlichen gleichschenkliges Trapez bilden, so dass eine grosse Schubfestigkeit in beiden Längsrichtungen erzielt wird.

Die Scheitelteile der äusseren Wellenprofile können mit den Scheitelteilen der inneren Wellenprofile durch Befestigungsmittel verbunden sein, welche auch der Befestigung der Lagerböcke auf diesem Scheitelteil dienen, wodurch die Befestigungsarbeiten erleichtert und Material eingespart wird.

Die beiliegenden Figuren erläutern die Erfindung anhand eines Ausführungsbeispiels. Es stellen dar

Fig. 1 eine Draufsicht auf eine an einer Brückenkonstruktion eines Sattelschleppers angebrachte Sattelkupplung und

Fig. 2 einen Schnitt nach der Linie II–II der Fig. 1.

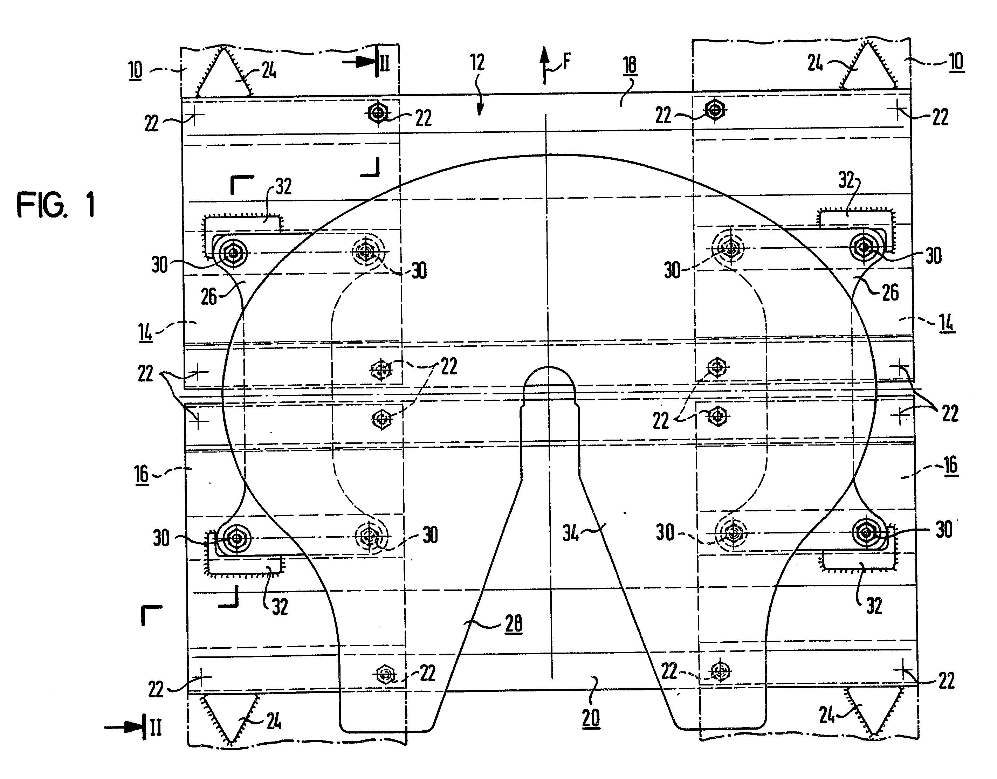

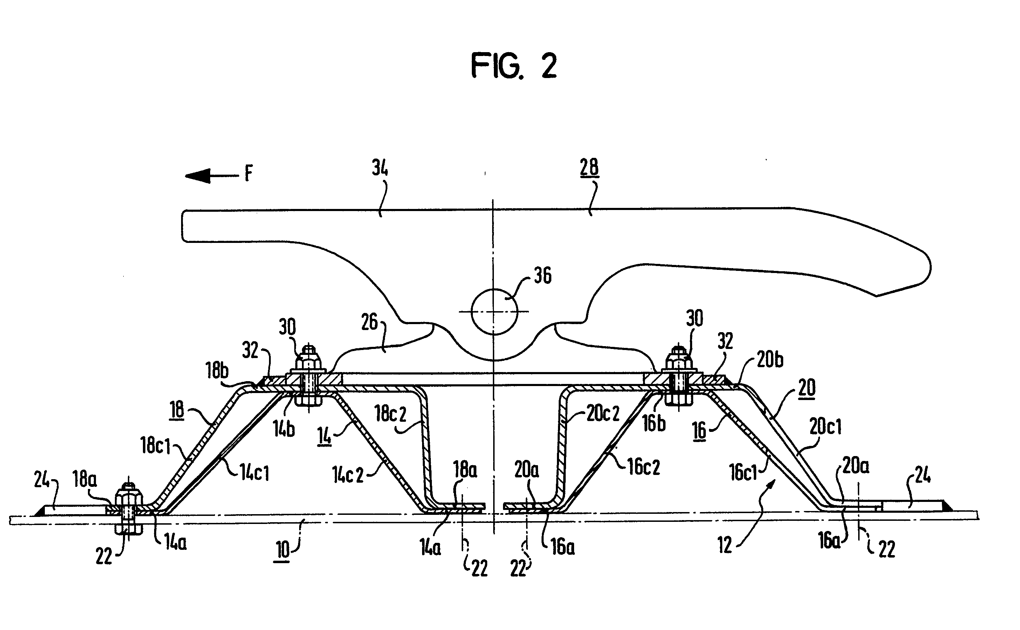

In den Fig. 1 und 2 ist eine Brückenkonstruktion 10 durch Längsträger des Sattelschleppers symbolisiert, welche mit Hilfsrahmenwinkeln versehen sein können.

Auf der Brückenkonstruktion 10 ist eine Montageplatte befestigt, die ganz allgemein mit 12 bezeichnet ist. Die Montageplatte 12 ist von zwei in Fahrtrichtung F gemäss Fig. 2 hintereinanderliegenden inneren Hutprofilpaaren 14 und 16 gebildet. Die Hutprofile 14 und 16 jedes Hutprofilpaars erstrecken sich, wie aus Fig. 1 ersichtlich, quer zur Fahrtrichtung F jeweils nur über einen Teil der Quererstreckung der Brückenkonstruktion 10. Über den inneren Hutprofilpaaren 14 und 16 sind zwei äussere Hutprofile 18 und 20 angeordnet, die äusseren Hutprofile 18 und 20 erstrecken sich, wie aus Fig. 1 ersichtlich, über die gesamte Breite der Brückenkonstruktion 10.

Die inneren Hutprofile 14 und 16 weisen Basisflansche 14a und 16a, Scheitelteile 14b und 16b und Flanken $14c^1$, $14c^2$ bzw. $16c^1$, $16c^2$ auf.

Die äusseren Hutprofile 18 weisen Basisflansche 18a und 20a, Scheitelteile 18b und 20b, Flanken $18c^1$, $18c^2$ bzw. $20c^1$, $20c^2$ auf.

Die Basisflansche 18a und 20a der äusseren Hutprofile 18, 20 liegen über den Basisflanschen 14a und 16a der inneren Hutprofile 14, 16 und sind gemeinsam mit diesen durch Befestigungsbolzen 22 an der Brückenkonstruktion 10 befestigt. Zur Erhöhung der Schubfestigkeit in Fahrtrichtung F sind an der Brückenkonstruktion 10 Anschläge 24 angeschweisst, welche mit den Enden der Basisflansche 14a, 16a und 18a, 20a in schubübertragendem Eingriff stehen.

Die Scheitelteile 14b und 16b der inneren Hutprofile 14, 16 liegen an den Unterseiten der Scheitelteile 18b und 20b der äusseren Hutprofile 18, 20 an. Auf den Oberseiten der Scheitelteile 18b und 20b der äusseren Hutprofile 18, 20 liegen die Lagerböcke 26 der ganz allgemein mit 28 bezeichneten Sattelkupplung auf. Sie sind mit den Scheitelteilen 14b, 16b und 18b, 20b durch Schraubenbolzen 30 verbunden, so dass gleichzeitig mit der Befestigung der Lagerböcke 26 auch die Scheitelteile der inneren und der äusseren Hutprofile miteinander verbunden sind.

Wie aus Fig. 2 zu ersehen, sind die Flanken $14c^1$ und $14c^2$ des inneren Hutprofils 14 gegenüber den

Flanken $18c^1$ und $18c^2$ des äusseren Hutprofils 18 geneigt. Das gleiche gilt für die Flanken des inneren Hutprofils 16 und des äusseren Hutprofils 20. Durch diese Neigung ergibt sich eine günstige Schubkraftübertragung in Fahrtrichtung F, die sich in Zug- und Druckbeanspruchungen der Flanken umsetzt. Die vertikalen Flanken $18c^2$ und $20c^2$ der äusseren Hutprofile 18 und 20 sorgen für eine hohe Steifigkeit in vertikaler Richtung.

Auf den Scheitelteilen 18b und 20b der Hutprofile 18, 20 sind L-förmige Anschläge 32 für die Lagerböcke 26 angebracht, welche der Schubaufnahme in horizontaler Längs- und Querrichtung dienen.

Auf den Lagerböcken 26 ist die Sattelplatte 34 um eine Kippachse 36 kippbar gelagert.

**Patentansprüche**

1. Anordnung einer aus Sattelplatte (34) und Lagerböcken (26) bestehenden Sattelkupplung (28) auf einer Brückenkonstruktion (10) eines Sattelschleppers, bei welcher die Lagerböcke auf der Brückenkonstruktion unter Zwischenschaltung einer Montageplatte (12) befestigt sind, wobei die Montageplatte aus mindestens einem äusseren quer zur Fahrtrichtung (F) verlaufenden Wellenprofil (18, 20) und mindestens einem inneren quer zur Fahrtrichtung verlaufenden Wellenprofil (14, 16) besteht, diese Wellenprofile mit ihren Basen an der Brückenkonstruktion befestigt sind, das äussere Wellenprofil (18, 20) auf der Oberseite seines Scheitelteils (18b, 20b) als Lagerbockauflager dient und das innere Wellenprofil (14, 16) mit der Oberseite seines Scheitelteils (14b, 16b) an der Unterseite des Scheitelteils des äusseren Wellenprofils befestigt ist, dadurch gekennzeichnet, dass von den Flanken ($14c^1$, $14c^2$, $16c^1$, $16c^2$) des inneren Wellenprofils (14, 16) mindestens eine gegen die benachbarte Flanke ($18c^1$, $18c^2$, $20c^1$, $20c^2$) geneigt ist.

2. Anordnung nach Anspruch 1, dadurch gekennzeichnet, dass die Basen (18a, 20a) des äusseren Wellenprofils (18, 20) die Basen (14a, 16a) des inneren Wellenprofils (14, 16) wenigstens teilweise übereinanderliegen und gemeinsam an der Brückenkonstruktion (10) befestigt sind.

3. Anordnung nach Anspruch 2, dadurch gekennzeichnet, dass die Basen (18a, 20a) des äusseren Wellenprofils (18, 20) und die Basen (14a, 16a) des inneren Wellenprofils (14, 16) wenigstens zum Teil von in horizontaler Ebene liegenden Flanschen gebildet sind.

4. Anordnung nach einem der Ansprüche 1 bis 3, dadurch gekennzeichnet, dass sich das äussere Wellenprofil (18, 20) quer zur Fahrtrichtung F über den vollen Abstand der Lagerböcke (26) erstreckt und dass im Bereich der Lagerböcke (26) jeweils mindestens ein quer zur Fahrtrichtung F kürzeres Wellenprofil (14, 16) angeordnet ist.

5. Anordnung nach einem der Ansprüche 1 bis 4, dadurch gekennzeichnet, dass in Fahrtrichtung F beabstandet, zwei äussere Hutprofile (18, 20) und innerhalb dieser äusseren Hutprofile (18, 20) mindestens jeweils ein inneres Hutprofil (14, 16) angeordnet sind.

6. Anordnung nach Anspruch 5, dadurch gekennzeichnet, dass zwei innere Hutprofile (14, 16) quer zur Fahrtrichtung F nebeneinander angeordnet sind, jeweils eines im Bereich jedes Lagerbocks (26).

7. Anordnung nach einem der Ansprüche 5 und 6, dadurch gekennzeichnet, dass die Scheitelteile (18b, 20b bzw. 14b, 16b) der äusseren und der inneren Hutprofile (18, 20 bzw. 14, 16) in Fahrtrichtung F jeweils im Bereich der vorderen und der hinteren Enden der Lagerböcke (26) angeordnet sind.

8. Anordnung nach einem der Ansprüche 5 bis 7, dadurch gekennzeichnet, dass von den Flanken ($18c^1$, $18c^2$, $20c^1$, $20c^2$) jeweils die von dem anderen äusseren Hutprofil fernliegende Flanke ($18c^1$, $20c^1$) zur Längsmitte der Lagerböcke (26) hin ansteigt, während die dem jeweils anderen äusseren Hutprofil naheliegende Flanke ($18c^2$, $20c^2$) im wesentlichen annähernd senkrecht zur Längsmitte der Lagerböcke verläuft.

9. Anordnung nach einem der Ansprüche 5 bis 8, dadurch gekennzeichnet, dass die Flanken ($14c^1$, $14c^2$, $16c^1$, $16c^2$) der inneren Hutprofile (14, 16) mit deren Scheitelteilen (14b, 16b) jeweils im wesentlichen ein Trapez bilden.

10. Anordnung nach einem der Ansprüche 1 bis 9, dadurch gekennzeichnet, dass die Scheitelteile (18b, 20b) der äusseren Wellenprofile (18, 20) mit den Scheitelteilen (14b, 16b) der inneren Wellenprofile (14, 16) durch Befestigungsmittel (30) verbunden sind, welche auch der Befestigung der Lagerböcke (26) auf diesen Scheitelteilen dienen.

11. Anordnung nach einem der Ansprüche 1 bis 10, dadurch gekennzeichnet, dass das äussere Wellenprofil (18, 20) und das innere Wellenprofil (14, 16) durch Nieten, Schweissstellen oder dergleichen miteinander vormontiert sind.

## Claims

1. Arrangement of a semi-trailer coupling (28), consisting of saddle plate (34) and pedestals (26), on a platform construction (10) of a semi-trailer tractor, in which the pedestals are secured on the platform construction with interposition of a mounting plate (12), where the mounting plate consists of at least one outer undulatory section (18, 20) extending transversely of the direction (F) of travel and at least one inner undulatory section (14, 16) extending transversely of the direction of travel, these undulatory sections are secured with their bases to the platform construction, the outer undulatory section (18, 20) serves on the upper side of its apex part (18b, 20b) as pedestal support and the inner undulatory section (14, 16) is secured with the upper side of its apex part (14b, 16b) to the under side of the apex part of the outer undulatory section, characterised in that at least one of the flanks ($14c^1$, $14c^2$, $16c^1$, $16c^2$) of the inner undulatory section (14, 16) is inclined in relation to the neighbouring flank ($18c^1$, $18c^2$, $20c^1$, $20c^2$).

2. Arrangement according to Claim 1, characterised in that the bases (18a, 20a) of the outer undulatory section (18, 20) and the bases (14a, 16a) of the inner undulatory section (14, 16) lie at least partially one above the other and are secured in common to the platform construction (10).

3. Arrangement according to Claim 2, characterised in that the bases (18a, 20a) of the outer undulatory section (18, 20) and the bases (14a, 16a) of the inner undulatory section (14, 16) are formed at least in part by flanges lying in horizontal plane.

4. Arrangement according to one of Claims 1 to 3, characterised in that the outer undulatory section (18, 20) extends transversely of the direction (F) of travel over the full interval of the pedestals (26) and in that in the region of the pedestals (26) in each case there is arranged at least one undulatory section (14, 16) which is shorter transversely of the direction (F) of travel.

5. Arrangement according to one of Claims 1 to 4, characterised in that, spaced in the direction (F) of travel, two outer cap sections (18, 20) are arranged and at least one inner cap section (14, 16) is arranged within each of these outer cap sections (18, 20).

6. Arrangement according to Claim 5, characterised in that two inner cap sections (14, 16) are arranged side by side transversely of the direction (F) of travel, one in the region of each pedestal (26).

7. Arrangement according to one of Claims 5 and 6, characterised in that the apex parts (18b, 20b and 14b, 16b) of the outer and inner cap sections (18, 20 and 14, 16 respectively) are arranged, in the direction (F) of travel, each in the region of the forward and the rear ends of the pedestals (26).

8. Arrangement according to one of Claims 5 to 7, characterised in that of the flanks ($18c^1$, $18c^2$, $20c^1$, $20c^2$) in each case the flank ($18c^1$, $20c^1$ lying remote from the other outer cap section rises towards the middle of the length of the pedestals (26), while the flank ($18c^2$, $20c^2$) lying close to the other outer cap section in each case extends substantially approximately perpendicularly of the middle of the length of the pedestals.

9. Arrangement according to one of Claims 5 to 8, characterised in that the flanks ($14c^1$, $14c^2$, $16c^1$, $16c^2$) of the inner cap sections (14, 16) each substantially form a trapezium with their apex parts (14b, 16b).

10. Arrangement according to one of Claims 1 to 9, characterised in that the apex parts (18b, 20b) of the outer undulatory sections (18, 20) are connected with the apex parts (14b, 16b) of the inner undulatory sections (14, 16) by securing means (30) which also serve for the securing of the pedestals (26) on these apex parts.

11. Arrangement according to one of Claims 1 to 10, characterised in that the outer undulatory section (18, 20) and the inner undulatory section (14, 16) are preassembled with one another by rivets, welds or the like.

## Revendications

1. Agencement d'attelage à sellette de semi-remorque, constitué par une plaque de sellette (34) et des supports (26) montés sur un pont (10) d'un tracteur de semi-remorque, dans lequel les supports sont fixés sur le pont avec interposition d'une plaque de montage (12), la plaque de montage étant constituée par au moins un profilé ondulé extérieur (18, 20) transversal au sens de la marche (F) et par au moins un profilé ondulé intérieur (14, 16) transversal au sens de la marche, ces profilés ondulés étant fixés par leurs bases au pont, le profilé ondulé extérieur (18, 20) servant, sur le côté supérieur de sa partie de tête (18b, 20b), d'appui pour les supports, et le profilé intérieur (14, 16) étant fixé, par le côté supérieur de sa partie de tête (14b, 16b), sur le côté inférieur de la partie de tête du profilé ondulé extérieur, caractérisé en ce que l'un au moins des flancs ($14c^1$, $14c^2$, $16c^1$, $16c^2$) du profilé ondulé intérieur (14, 16) est incliné en direction du flanc voisin ($18c^1$, $18c^2$, $20c^1$, $20c^2$).

2. Agencement selon la revendication 1, caractérisé en ce que les bases (18a, 20a) du profilé ondulé extérieur (18, 20) recouvrent au moins partiellement les bases (14a, 16a) du profilé ondulé intérieur (14, 16) et sont fixés en commun sur le pont (10).

3. Agencement selon la revendication 2, caractérisé en ce que les bases (18a, 20a) du profilé ondulé extérieur (18, 20) et les bases (14a, 16a) du profilé ondulé intérieur (14, 16) sont formées au moins en partie par des rebords situés dans des plans horizontaux.

4. Agencement selon l'une quelconque des revendications 1 à 3, caractérisé en ce que le profilé ondulé extérieur (18, 20) s'étend transversalement par rapport au sens de la marche (F) sur la totalité de l'écartement des supports (26) et en ce que dans la région des supports (26) est disposé au moins un profilé ondulé plus court (14, 16) respectif transversalement au sens de la marche (F).

5. Agencement selon l'une quelconque des revendications 1 à 4, caractérisé en ce que sont disposés, séparés dans le sens de la marche (F), deux profilés extérieurs en forme de chapeau (18, 20) et, à l'intérieur de ces profilés extérieurs en forme de chapeau (18, 20), au moins un profilé intérieur respectif en forme de chapeau (14, 16).

6. Agencement selon la revendication 5, caractérisé en ce que deux profilés intérieurs en forme de chapeau (14, 16) sont disposés l'un à côté de l'autre transversalement au sens de la marche (F), chacun étant situé dans la région de chaque support (26).

7. Agencement selon les revendications 5 et 6, caractérisé en ce que les parties de tête (18b, 20b ou 14b, 16b) des profilés extérieurs et intérieurs en forme de chapeau (18, 20 ou 14, 16) sont disposés respectivement dans le sens de la marche (F) dans la région des extrémités avant et des extrémités arrière des supports (26).

8. Agencement selon l'une quelconque des revendications 5 à 7, caractérisé en ce que chaque flanc ($18c^1$, $20c^1$) faisant partie des flancs ($18c^1$, $18c^2$, $20c^1$, $20c^2$), et qui est éloigné de l'autre profilé extérieur en forme de chapeau, va en montant en direction de l'axe longitudinal des supports (26), alors que le flanc ($18c^2$, $20c^2$) qui est proche de l'autre profilé extérieur en forme de chapeau est sensiblement perpendiculaire à l'axe longitudinal des supports.

9. Agencement selon l'une quelconque des revendications 5 à 8, caractérisé en ce que les flancs ($14c^1$, $14c^2$, $16c^1$, $16c^2$) des profilés intérieurs en forme de chapeau (14, 16) forment sensiblement un trapèze avec leurs parties de tête respectives (14b, 16b).

10. Agencement selon l'une quelconque des revendications 1 à 9, caractérisé en ce que les parties de tête (18b, 20b) des profilés extérieurs (18, 20) sont reliées aux parties de tête (14b, 16b) des profilés ondulés intérieurs (14, 16) par des moyens de fixation servant également à la fixation des supports (26) sur ces parties de tête.

11. Agencement selon l'une quelconque des revendications 1 à 10, caractérisé en ce que le profilé ondulé extérieur (18, 20) et le profilé ondulé intérieur (14, 16) sont assemblés à l'avance l'un à l'autre par des rivets, points de soudure ou analogues.

FIG. 1

# FIG. 2